# EUROPEAN PATENT SPECIFICATION

(11) **EP 2 604 446 B1**
(45) Date of publication and mention of the grant of the patent: **01.10.2014**
(21) Application number: 12193914.4
(22) Date of filing: 22.11.2012
(51) Int. Cl.: B60C 1/00, C08K 7/02, C08L 7/00

(54) **Tire containing internal cord reinforced rubber layer**
Reifen, der eine Innenkordschicht aus verstärktem Gummi enthält
Pneu contenant une couche de caoutchouc renforcée par une corde interne

(30) Priority: 25.11.2011 US 201113304428
(43) Date of publication of application: 19.06.2013
(73) Proprietor: The Goodyear Tire & Rubber Company, Akron, OH 44316-0001 (US)
(72) Inventor: Sandstrom, Paul Harry, Cuyahoga Falls, OH Ohio 44223 (US)
(74) Representative: Kutsch, Bernd

(56) References cited:
- EP-A1- 2 072 282
- JP-A- S6 197 342
- JP-A- 2002 362 107
- US-A1- 2007 137 745

## Description

### Field of the Invention

This invention relates to a tire which contains an internal cord reinforced rubber layer.

### Background of the Invention

Pneumatic rubber tires are usually prepared with components which contain cord reinforcement such as, for example, carcass plies and circumferential tread belt plies. Such cord reinforcement may comprise, for example, a plurality of filaments which may be twisted (cabled) together to form the cord.

For example, a tread belt ply may be a metal cord reinforced rubber layer underlying a circumferential tread rubber layer and positioned between the tire tread and tire carcass to add stability and thereby enhance dimensional integrity to the tire configuration.

Such circumferential belt plies, or layers of metal cord reinforced rubber layers, may, for example, be comprised of reinforcement in a form of a plurality of brass coated steel wire cords, or textile cords, encompassed by a natural cis 1,4-polyisoprene rubber composition. Such textile cords may be, for example, a plurality of at least one of nylon, polyester, rayon and polyaramid filaments.

The natural cis 1,4-polyisoprene elastomer is typically used for the cord reinforced rubber layer to promote green strength, building tack strength and adhesion to the cord for the uncured rubber as well as to promote cut growth and tear resistance for the sulfur cured rubber composition.

Synthetic cis 1,4-polylisoprene elastomer is considered to be less effective for promoting the above physical properties which are important for the cord reinforced rubber layer for tires, particularly as related to the aforesaid desirable green strength and building tack (e.g. for tire building and shaping during the tire curing process).

A challenge is presented, and a significant aspect of the this invention is presented, for an evaluation of partial replacement of a portion of the natural cis 1,4-polyisoprene rubber with synthetic cis 1,4-polyisoprene elastomer for such purpose, namely cord reinforced rubber compositions for tire components.

In the description of this invention, the term "phr" where used means "parts of material by weight per 100 parts by weight of rubber". The terms "rubber" and "elastomer" may be used interchangeably unless otherwise indicated. The terms "rubber composition" and "compound" may be used interchangeably unless otherwise indicated.

### Summary and Practice of the Invention

The invention relates to a tire in accordance to claim 1.

Dependent claims refer to preferred embodiments of the invention.

In accordance with a preferred embodiment of this invention, a tire is provided which contains a component comprising an internal layer of cord reinforced rubber composite, wherein said composite comprises, based upon parts by weight per 100 parts by weight rubber (phr):
(A) a rubber composition comprising:
   (1) elastomers comprising:
      (a) from 0 to 70, alternately from 20 to 70, phr of natural cis 1,4-polyisoprene rubber,
      (b) 20 to 95, alternately from 30 to 70, phr of synthetic cis 1,4-polyisoprene rubber, and
      (c) 2 to 20, alternately from 5 to 15, phr of trans 1,4-polyisoprene rubber.
   (2) a particulate rubber reinforcing filler in an amount of from 20 to 70 phr thereof comprising
      (a) rubber reinforcing carbon black, or
      (b) silica, preferably precipitated silica, or
      (c) a combination of rubber reinforcing carbon black and silica which contains from 5 to 45 phr of said silica;
         optionally also containing a coupling agent for said silica (when said rubber composition contains said silica) having a moiety reactive with hydroxyl groups (e.g. silanol groups) on said silica and another different moiety interactive with said natural cis 1,4-polyisoprene rubber, synthetic cis 1,4-polyisoprene rubber and trans 1,4-polyisoprene rubber, and
(B) at least one cord, preferably a plurality of parallel cords which are preferably aligned substantially parallel to each other, encapsulated by said rubber composition,
   wherein said cords individually comprise at least one filament, alternately a plurality of cabled (twisted together) filaments,
   wherein said filament(s) is(are) comprising:
   (1) metal filament(s) comprising brass coated steel filament(s) or, alternately,
   (2) organic filament(s) comprising at least one of nylon, polyester, rayon and polyaramid filaments.

In a preferred embodiment, said cords comprise brass coated steel filaments (therefore being exclusive of said organic filaments, namely cords comprising at least one of nylon, polyester, rayon and polyaramid filaments).

In one embodiment, the rubber layer is a belt ply in a sense of being a circumferential rubber layer positioned between a circumferential outer rubber tread and supporting inner rubber carcass.

In one embodiment, the rubber layer is a carcass ply, normally extending from bead to bead of the pneumatic tire carcass (through the crown portion of the tire).

In one embodiment, said rubber composition contains a resinous reaction product of a methylene donor and methylene acceptor compound formed in situ within the rubber composition (formed from the reaction of said methylene donor and methylene acceptor within the rubber composition), to promote low strain stiffness (promote stiffness of the rubber composition at a low strain, or dynamic elongation), and cured adhesion to tire cords. Such methylene donor may comprise, for example, hexamethoxymethylmelamine, and said methylene acceptor may comprise, for example, at least one of unmodified phenol novolac resin and modified phenol novolac resin , resorcinol and mixtures thereof.

In one embodiment, for cords comprising brass coated steel filaments, said rubber composition contains a cobalt or zirconium salt to promote improved original and aged adhesion to brass coated steel filaments. Such cobalt or zirconium salt may comprise, for example, at least one of cobalt or zirconium naphthenate, and cobalt or zirconium neodecanoate in an amount of from 0.05 to 5 phr.

A significance of using the optional zirconium or cobalt salt, particularly the cobalt naphthenate, for the rubber composition of the metal cord reinforced rubber composition is considered herein to be beneficial to promote good cord adhesion particularly where brass or bronze coated steel wire is used for the cord.

A significant aspect, or embodiment, of this invention is a total replacement of natural cis 1,4-polyisoprene rubber with a combination of synthetic polyisoprene elastomers consisting of cis 1,4-polyisoprene rubber and synthetic trans 1,4-polyisoprene rubber in compounds containing cord reinforcement, particularly when cords of brass coated steel filaments are used.

An alternate embodiment is utilization of rubber containing elastomers consisting of a combination of polyisoprene elastomers comprised of natural cis 1,4-polyisoprene rubber, synthetic cis 1,4-polyisoprene rubber and trans 1,4-polyisoprene rubber in compounds containing cord reinforcement, particularly when cords of brass coated steel filaments are used.

Historically a rubber composition without cord reinforcement has been suggested comprising trans 1,4-polyisoprene rubber with at least one of natural and synthetic cis 1,4-polyisoprene rubber for a tread base rubber composition, namely a rubber layer underlying an outer tread cap rubber layer. For example, see US-A-5,284,195.

A significance of requiring the rubber of the rubber composition of the metal cord reinforced rubber composite to replace natural cis 1,4-polyisoprene rubber with the aforesaid combination of synthetic polyisoprene elastomers, thereby excluding other elastomers, comprising natural cis 1,4-polyisoprene rubber, synthetic cis 1,4-polyisoprene rubber and synthetic trans 1,4-polyisooprene rubber is to promote, for example, the uncured rubber composition's green strength and tack (building tack) strength and the cured rubber composition's adhesion to the aforesaid cord, particularly cords of brass coated steel filaments, and, also improve the cut growth resistance of the cured rubber composition, all in a sense of being a departure from past practice.

In practice, it is recognized that the synthetic cis 1,4-polyisoprene rubber differs from natural cis 1,4-polyisoprene rubber in a sense of typically having a comparatively poor green strength and typically somewhat lower tack (e.g. building) tack strength for the uncured rubber.

In practice, the trans 1,4-polyisoprene rubber is uniquely a synthetic polyisoprene polymer which, in its uncured state, has a relatively low softening point of 60°C which is well below the conventional rubber mixing temperature in an internal rubber mixer in a range of from 140°C to 180°C. Further, it tends to be more of a thermoplastic polymer, or resin, than most other rubbers at room temperature (e.g. 23°C) because of its crystallinity which promotes higher mixing shear in an internal rubber mixer and thereby a potential of improving the dispersion of reinforcing filler in the rubber composition. However because, in part, it contains many carbon-to-carbon double bonds in its polymer backbone, it can, however, be suitably blended and sulfur co-cured with elastomers to yield a cured rubber composition.

Typically, the trans 1,4-polyisoprene has at least 90, and more usually and preferably at least 95 percent of its isoprene repeat units comprising a trans 1,4-isomeric microstructure and, in its uncured state, a melting point in a range of from 50°C to 70°C as compared to cis 1,4-polyisoprene rubber which may have a cis 1,4-isomeric microstructure of at least 90, and more usually at least 95 percent.

The trans 1,4-isomeric content may be determined, for example, by infrared analysis.

Its melting point (Tm) may be determined, for example, by differential scanning calorimetric analysis at a heating rate of 10°C per minute by conventional method known to those having skill in such art. An instrument such as, for example, DuPont 9900 instrument, might be used. While the term "melting point" is considered to more accurately refer to the Tm, in some cases in this text it might be referred to as a softening point. Its glass transition temperature (Tg) may be, for example, in a range of from -65 to -75°C.

The optional methylene acceptor compound additive may be used for the metal cord reinforced rubber composition with which the methylene donor compound reacts to form a resin product in situ within the rubber composition. Representative compounds which may be used as a methylene acceptor include phenol novolac resins, and particularly modified phenol novolac resins. Various methylene acceptors are mentioned in, for example, US-A- 6,605,670, US-A-6,472,457, US-A- 5,945,500, US-A- 5,936,056, US-A- 5,688,871, US-A- 5,665,799, US-A- 5,504,127, US-A- 5,405,897, US-A- 5,244,725, US-A- 5,206,389, US-A-5,194,513, US-A- 5,030,692, US-A- 4,605,696, US-A- 4,436,853 and US-A-4,092,455.

The amount of methylene acceptor compound in the rubber composition may vary, depending somewhat upon the amount of methylene donor compound used as well as the selection of the methylene acceptor compound itself and a desired ratio of methylene donor compound to methylene acceptor compound. For example, the amount of methylene acceptor compound, as a component of said resinous reaction product of said methylene donor and methylene acceptor, may be in a range of from 0.1 to 5, alternatively from 0.5 to 3 phr.

A weight ratio of the methylene acceptor compound to methylene donor compound may range, for example, from 5/1 to 1/5.

A combination of methylene donor compound and methylene acceptor compound for the rubber composition of the cord reinforced rubber composite is considered herein to be beneficial to promote high low strain stiffness (G' storage modulus at from 1 to 10 percent strain at 100°C) values for the cured rubber composition and good adhesion of the rubber composition to the reinforcing cord.

A significance of using precipitated silica reinforcement, in combination with a silica coupling agent, is considered herein to be beneficial to promote low hysteresis for the rubber composition.

For the evaluation of this invention, physical properties including green strength and building tack strength for the uncured rubber composition and, also cut growth resistance and cord adhesion for the cured rubber composition are to be taken into consideration. A tack value of at least 5 Newtons (5N), according to the defined test procedure, is considered adequate for all tire building applications when using the inventive elastomer blends in the tire building process. The additional focus is on the ability to not only improve green strength and cut growth, in addition to wire adhesion, while maintaining a minimum value of 5N for tack strength.

The practice of this invention is further illustrated by reference to the following examples which are intended to be representative rather than restrictive of the scope of the invention. Unless otherwise indicated, the parts and percentages are by weight.

### EXAMPLE I

Rubber samples were prepared to evaluate replacement of synthetic cis 1,4-polyisoprene rubber with trans 1,4-polyisoprene rubber for a composite of brass coated steel filament reinforcement in a rubber composition.

For this evaluation rubber Samples A through E were evaluated.

Control rubber Sample A was prepared with its elastomer component being natural cis 1,4-polyisoprene rubber.

Control rubber Sample B was prepared with its elastomer component being synthetic cis 1,4-polyisoprene rubber.

Experimental rubber Samples C, D and E were prepared with the synthetic cis 1,4-polyisoprene rubber of the Control rubber Sample B being replaced with 5, 10 and 20 phr of trans 1,4-polyisoprene polymer, respectively.

The rubber compositions were prepared by blending the ingredients in an internal rubber mixer in a series of sequential mixing steps while sheeting out the rubber mixtures and cooling to a temperature below 40°C between mixing steps. The sequential mixing steps were comprising a first non-productive mixing step followed by a productive mixing step (in which sulfur and accelerators were added).

The basic formulation for the rubber Samples A through E is presented in the following Table 1 in terms of parts by weight unless otherwise indicated.

**Table 1**

| First Non-Productive Mixing Step (NP1) | Parts |
|---|---|
| Synthetic cis1,4-polyisoprene rubber¹ | 100, 95, 90, 80 |
| Natural cis 1,4-polyisoprene rubber² | 100, 0 |
| Synthetic trans 1,4-polyisoprene rubber³ | 0, 5, 10, 20 |
| Carbon black (N347)⁴ | 45 |
| Silica, precipitated⁵ | 15 |
| Silica coupling agent⁶ | 1 |
| Rubber processing oil | 1.5 |
| Fatty acid⁷ | 2 |
| Zinc oxide | 2 |
| Cobalt neodecanoate | 0.1 |
| Antidegradants | 4.5 |
| | |

| Productive Mixing Step (P) | |
|---|---|
| Sulfur (80% active) | 5 |
| Sulfur cure accelerator⁸ | 0.8 |

| | |
|---|---|
| ¹Synthetic cis 1,4-polyisoprene rubber as NAT™ 2200 from The Goodyear Tire & Rubber Company ²Natural cis 1,4-polyisoprene rubber, TSR10 ³Synthetic trans 1,4-polyisoprene rubber as TPR™ 301 from Kururay ⁴Rubber reinforcing carbon black (N347), an ASTM designation ⁵Precipiatated silica as Zeosil™ 1165 MP from Rhodia ⁶Silica coupling agent as Si266™ from Evonic comprised of bis(3-triethoxysilylpropyl) polysulfide with an average of from about 2 to about 2.6 connecting sulfur atoms in the polysulfidic bridge ⁷Fatty acid comprised primarily of stearic, palmitic and oleic acids ⁸Sulfenamide accelerator as t-butyl benzothiazole sulfenamide | |

The following Table 2 illustrates cure behavior and various physical properties of rubber Samples A through E based upon the basic formulation of Table 1. The rubber samples were sulfur cured, where appropriate, for 32 minutes at 150 °C.

**Table 2**

| | Parts (phr) | | | | |
|---|---|---|---|---|---|
| | Controls | | Exp'l Rubber Samples | | |
| Elastomers | A | B | C | D | E |
| Natural cis 1,4-polyisoporene rubber | 100 | 0 | 0 | 0 | 0 |
| Synthetic cis 1,4-polyisoprene rubber | 0 | 100 | 95 | 95 | 80 |
| Synthetic trans 1,4-polyisopraene rubber | 0 | 0 | 5 | 10 | 20 |

| Properties | | | | | |
|---|---|---|---|---|---|
| Tack strength¹, building tack (N) | 20.7 | 9.4 | 12.4 | 12.6 | 7.2 |

| Green strength² (MPa) | | | | | |
|---|---|---|---|---|---|
| 40% dumbbell modulus | 0.34 | 0.33 | 0.58 | 1.04 | 1.8 |
| 240% dumbbell modulus | 0.55 | 0.32 | 0.71 | 1.09 | 3.37 |

| Cut growth³, original at 23°C | | | | | |
|---|---|---|---|---|---|
| millimeters (mm) per 60 minutes | 19.3 | 18.4 | 16.4 | 12.8 | 12.8 |

| Wire Cord Adhesion (SWAT)⁴ 23°C, (N) | | | | | |
|---|---|---|---|---|---|
| Force (N), original | 578 | 593 | 644 | 645 | 592 |
| Percent rubber coverage of wire (%) | 90 | 85 | 85 | 95 | 80 |
| Force (N), aged 10 days in water at 90°C | 537 | 537 | 578 | 566 | 497 |
| Percent rubber coverage of wire (%) | 55 | 35 | 45 | 45 | 35 |
| Force (N), aged 10 days in nitrogen, 120°C | 662 | 775 | 799 | 807 | 687 |
| Percent rubber coverage of wire (%) | 90 | 90 | 95 | 95 | 90 |

| Rheometer, 150°C (MDR)⁵ | | | | | |
|---|---|---|---|---|---|
| Delta torque (dNm) | 22.2 | 24.6 | 25.2 | 24.6 | 24.6 |
| T90, minutes | 10.2 | 12.6 | 12.4 | 12.2 | 11.6 |

| RPA⁶ | | | | | |
|---|---|---|---|---|---|
| Storage modulus (G'), 1% strain, KPa | 2722 | 4025 | 4054 | 3857 | 3794 |
| Storage modulus (G'), 10% strain, KPa | 1599 | 1930 | 1970 | 1899 | 1895 |
| Tan delta, 10% strain | 0.145 | 0.174 | 0.170 | 0.173 | 0.183 |

| Stress-Strain: ATS, 32 min, 150°C⁷ | | | | | |
|---|---|---|---|---|---|
| Tensile strength (MPa) | 16.6 | 16.6 | 15.1 | 15 | 16.4 |
| Elongation (ultimate) at break (%) | 313 | 333 | 300 | 301 | 335 |
| 200% modulus, ring (MPa) | 10.6 | 10.5 | 10.7 | 10.5 | 10.2 |
| Rebound, 100°C | 66 | 62 | 62 | 61 | 59 |
| Hardness, Shore A, 100°C | 67 | 72 | 73 | 72 | 72 |
| Tear strength⁸, (N) at 95°C | 63 | 60 | 50 | 45 | 48 |

| | | | | | |
|---|---|---|---|---|---|
| ¹Tack strength according to a positive pressure tack test for interfacial tack between two uncured rubber samples by pulling apart two uncured rubber samples at ambient room temperature (e.g. 23°C) which had been pressed together with a pressure of 0.2 MPa (30 psi) for 30 seconds following which the pressure is released. The force to pull the samples apart is measured in terms of Newtons (N) force ²Green strength: uncured samples tested at 23°C using a dumbbell died (cut) from a molded compound sheet and tested with a pulling rate of 508 cm/min and force measured to pull reported in MPa ³Cut growth rate by continuous dynamic flexing of a rubber sample and measuring the rate of crack growth expressed in terms of millimeters (mm) in the Table in terms of minutes of flexing at 23°C ⁴Standard wire and textile cord adhesion test (SWAT) conducted by embedding brass coated wire cord in the rubber composition. The rubber/cord samples were then cured at the indicated temperatures. The respective cords in the rubber samples were subjected to a pull-out test according to ASTM D2229-73. The results of the pull-out tests are expressed in Newtons. The percentage of rubber coverage of the wire cord is reported where 100 percent coverage is desirable although difficult to obtain. The wire cord was a brass coated steel wire. ⁵Data by Moving Die Rheometer instrument (MDR) ⁶Data by Rubber Process Analyzer instrument (RPA) ⁷Data by Automated Testing System instrument (ATS) of the Instron Corporation ⁸Tear Strength (peel strength adhesion test) to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180°angle to each other using an Instron instrument. The area of contact at the interface between the rubber samples is facilitated by placement of a Mylar™ film between the samples with a cut-out window in the film to enable the two rubber samples to contact each other following which the samples are vulcanized together and the resultant composite of the two rubber compositions are used for the peel strength test. | | | | | |

It can be seen from Table 2 that Control rubber Sample B, which contains 100 phr of synthetic cis 1,4-polyisoprene as compared to Control rubber Sample A, which contains 100 phr of natural rubber, that the synthetic cis 1,4-polyisoprene rubber presents the following important comparative disadvantages, namely lower tack strength and lower green strength for the uncured rubber composition. These two properties of an uncured rubber compound, particularly when it is to be used in a cord containing tire component, such as a ply or belt compound, severely hampers the formative calendaring process with tire cord wherein the higher green strength is necessary to maintain proper cord spacing and also during the tire building process where the rubber composition's green strength and tack are important physical properties for building a uniform rubber/cord composite for the tire component. The green strength is also very important during the tire shaping taking place during the curing process in the curing mold. This is considered to be significant in a sense that a lack of adequate building tack and/or green strength can lead to inferior tire uniformity after the final curing of the tire in that the cords may have uneven spacing in the ply or belt compounds.

It can also be seen from Table 2 that the addition of 5 phr of trans 1,4-polyisoprene to synthetic cis 1,4-polyisoprene (Experimental rubber Sample C) or 10 phr of trans 1,4-polyisoprene to synthetic cis 1,4-polyisoprene (Experimental rubber Sample D) can provide a significant improvement in the uncured rubber's tack strength and green strength as shown by the higher values reported in Table 2.

However, it can further be observed that the addition of 20 phr of trans 1,4-polyisoprene to synthetic cis 1,4-polyisoprene (Experimental rubber Sample E) has a negative effect on tack strength, even though the green strength is further improved.

The results reported in Table 2 for Experimental rubber Samples C, D and E also show significant improvement in cut growth resistance (rate of cut growth) in the sense of observed lower values of cut growth after the test has been conducted for 60 minutes.

An additional significant positive result is observed for the improved wire adhesion for Experimental rubber Samples C and D, which contain 5 and 10 phr, respectively of trans 1,4-polyisoprene, as related to original wire adhesion and also wire adhesion measured after samples have been aged 10 days in water at 90°C or 10 days in nitrogen atmosphere at 120°C. However, it is further observed that, at the 20 phr level of trans 1,4-polyisoprene, namely for Experimental rubber Sample E, the wire adhesion is equal before aging and reduced significantly after either aging condition has been applied prior to the wire adhesion test. These results suggest the upper maximum use for trans 1,4-polyisoprene, when blended with synthetic cis 1,4-polisoprene in the absence of natural cis 1,4-polyisoprene is below 20 phr. This is considered to be significant in a sense that at the 5 or 10 phr level of trans 1,4-polyisoprene in blends with synthetic cis 1,4-polyisoprene improve tack and green strength can be observed to be improved as well as original and aged wire adhesion when compared to a control compound (Control rubber Sample A) containing100 phr of natural cis 1,4-polyisoprene.

### EXAMPLE II

Rubber samples were prepared to evaluate replacement of 10 percent of the natural cis 1,4-polyisoprene rubber with synthetic trans 1,4-polyisoprene rubber.

For this evaluation rubber Control rubber Sample F and Comparative rubber Sample G were evaluated with results illustrated in Table 3.

Control rubber Sample F was prepared with its elastomer component being natural cis 1,4-polyisoprene rubber (100 phr).

Comparative rubber Sample G was prepared with its elastomer component being 90 phr of natural cis 1,4-polyisoprene rubber and 10 phr of synthetic trans 1,4-polyisoprene rubber. This comparison was made since in the previous example (Example I) it was shown that the addition of 10 phr of tran 1,4-polyisoprene to synthetic cis 1,4-polyisoprene gave improved tack and green strength, improved cut growth resistance and improved wire adhesion, original and aged.

The rubber compositions were prepared as in Example I.

The following Table 3 illustrates cure behavior and various physical properties of rubber Samples F and G based upon the basic formulation illustrated in Table 1 of Example I. The rubber samples were sulfur cured, where appropriate, for 32 minutes at 150°C.

**Table 3**

| | Parts (phr) for Rubber Samples | |
|---|---|---|
| | Control | Comparative |
| Elastomers | F | G |
| Natural cis 1,4-polyisoporene rubber | 100 | 90 |
| Synthetic cis 1,4-polyisoprene rubber | 0 | 0 |
| Synthetic trans 1,4-polyisoprene rubber | 0 | 10 |

| Properties | | |
|---|---|---|
| Tack strength¹, building tack, (N) | 18.1 | 6.2 |

| Green strength² (MPa) | | |
|---|---|---|
| 40% dumbbell modulus | 0.4 | 0.81 |
| 120% dumbbell modulus | 1.04 | 1.65 |
| Cut growth³, original at 23°C millimeters (mm) per 60 minutes | 22 | 16.3 |

| Wire cord adhesion (SWAT)⁴ 23°C, (N) | | |
|---|---|---|
| Force (N), original | 593 | 578 |
| Force (N), aged 10 days in water at 90°C | 610 | 585 |
| Force (N), aged 10 days in nitrogen, 120°C | 687 | 647 |

| Rheometer, 150°C (MDR) | | |
|---|---|---|
| Delta torque (dNm) | 22.7 | 23.3 |
| T90, minutes | 12.2 | 12.5 |

| Stress-Strain: ATS, 32 min, 150°C⁵ | | |
|---|---|---|
| Tensile strength (MPa) | 18.2 | 16.5 |
| Elongation (ultimate) at break (%) | 347 | 319 |
| 200% modulus, ring (MPa) | 10.3 | 16.9 |
| Rebound, 100°C | 62 | 61 |
| Hardness, Shore A, 100°C | 67 | 68 |
| Tear strength⁶, (N) at 95°C | 74 | 69 |

It can be seen from Table 3 that although the cut growth and green strength of natural cis 1,4-polyisoprene is improved by the addition of 10 phr synthetic trans 1,4-polyisoprene, that tack strength and wire adhesion, original and aged are reduced. This is in sharp contrast to the same addition of 10 phr of trans 1,4-polyisoprene to synthetic cis 1,4-polyisoprene as observed in Example I.

In summary, it is concluded that, the addition of synthetic trans 1,4-polyisoprene to synthetic and natural cis 1,4-polyisoprene, individually, gives different results relative to tack strength and wire adhesion, whereas the positive impact on green strength and cut growth resistance is similar.

### EXAMPLE III

Rubber samples were prepared to evaluate replacement of natural cis 1,4-polyisoprene rubber with synthetic polyisoprene elastomers selected from synthetic cis 1,4-polyisoprene and synthetic trans 1,4-polyisopene.

For this evaluation, rubber Samples H through O were evaluated with results illustrated in Table 4.

Experimental rubber Sample H contained 100 phr of synthetic cis 1,4-polyisoprene, whereas rubber samples J, L and N were prepared with their elastomer components being two polyisoprene elastomers comprising a combination of natural cis 1,4-polyisoprene rubber and synthetic cis 1,4-polyisoprene rubber.

Experimental rubber Samples K, M and O were prepared with their elastomer components being three polyisoprene elastomers comprising a combination of natural cis 1,4-polyisoprene rubber, synthetic cis 1,4-polyisoprene rubber and synthetic trans 1,4-polyisoprene rubber.

Experimental rubber Sample I was prepared with its elastomer component being two polyisoprene elastomers comprising a combination of synthetic cis 1,4-polyisoprene rubber and synthetic trans 1,4-polyisoprene rubber.

The rubber compositions were prepared in the manner of Example I.

The following Table 4 illustrates cure behavior and various physical properties of rubber Samples H through O based upon the basic formulation of Table 1 of Example I. The rubber samples were sulfur cured, where appropriate, for 32 minutes at 150°C.

**Table 4**

| Parts (phr) | | | | | | | | |
|---|---|---|---|---|---|---|---|---|
| Exp'I Rubber Samples | | | | | | | | |
| Elastomers | H | I | J | K | L | M | N | O |
| Natural cis 1,4-polyisoporene rubber | 0 | 0 | 25 | 20 | 50 | 45 | 75 | 70 |
| Synthetic cis 1,4-polyisoprene rubber | 100 | 90 | 75 | 70 | 50 | 45 | 25 | 20 |
| Synthetic trans 1,4-polyisoprene rubber | 0 | 10 | 0 | 10 | 0 | 10 | 0 | 10 |

| Properties | | | | | | | | |
|---|---|---|---|---|---|---|---|---|
| Tack strength¹, building tack (N) | 8.4 | 10.3 | 11.5 | 9.1 | 16.6 | 6.8 | 14.6 | 7.2 |

| Green strength² (MPa) | | | | | | | | |
|---|---|---|---|---|---|---|---|---|
| 40% dumbbell modulus | 0.33 | 0.73 | 0.41 | 0.84 | 0.36 | 0.8 | 0.45 | 0.81 |
| 120% dumbbell modulus | 0.49 | 1.2 | 0.98 | 1.62 | 0.73 | 1.84 | 1.45 | 1.8 |

| Cut growth³, original at 23°C millimeters | | | | | | | | |
|---|---|---|---|---|---|---|---|---|
| (mm) per 60 minutes | 21.3 | 18.9 | 21.2 | 19.9 | 21.1 | 17.4 | 21.4 | 18.3 |

| Wire cord adhesion (SWAT)⁸ 23°C, (N) | | | | | | | | |
|---|---|---|---|---|---|---|---|---|
| Force (N), original | 549 | 628 | 589 | 588 | 546 | 564 | 550 | 595 |
| Force (N), aged 10 days in water at 90°C | 573 | 615 | 578 | 631 | 600 | 634 | 647 | 668 |
| Force (N), aged 10 | 729 | 739 | 760 | 859 | 731 | 782 | 721 | 575 |
| days in nitrogen at 120°C | | | | | | | | |

| Rheometer. 150°C (MDR)⁴ | | | | | | | | |
|---|---|---|---|---|---|---|---|---|
| Delta torque (dNm) | 25.6 | 24.8 | 24.2 | 24.2 | 23.6 | 24 | 23 | 23.3 |
| T90, minutes | 14.8 | 14.4 | 14.3 | 14 | 13.6 | 13.4 | 12.7 | 12.8 |

| RPA³ | | | | | | | | |
|---|---|---|---|---|---|---|---|---|
| Storage modulus (G'), 1% strain, KPa | 4276 | 4102 | 4110 | 4078 | 3734 | 3906 | 3299 | 3586 |
| Storage modulus (G'), 10% strain, KPa | 2221 | 2190 | 2179 | 2183 | 2063 | 2136 | 1296 | 2050 |
| Tan delta, 10% strain | 0.15 | 0.15 | 0.15 | 0.15 | 0.14 | 0.14 | 0.14 | 0.14 |

| Stress-Strain: ATS, 32 min, 150°C⁵ | | | | | | | | |
|---|---|---|---|---|---|---|---|---|
| Tensile strength (MPa) | 18.6 | 16.4 | 17.7 | 19.1 | 18.1 | 15.5 | 18.1 | 16 |
| Elongation (ultimate) at break (%) | 384 | 345 | 360 | 391 | 363 | 316 | 357 | 315 |
| 200% modulus, ring (MPa) | 9.85 | 9.69 | 10 | 9.81 | 10 | 10.1 | 10 | 10.3 |
| Rebound,100°C | 58 | 58 | 60 | 58 | 61 | 58 | 61 | 61 |
| Hardness, Shore A, 100°C | 71 | 70 | 69 | 70 | 68 | 70 | 69 | 69 |
| Tear strength⁶, (N) at 95°C | 51 | 51 | 48 | 50 | 63 | 58 | 63 | 65 |

It can be seen from Table 4 that the addition of 10 phr of synthetic trans 1,4-polyisoprene to only synthetic cis 1,4-polyisoprene produces an improvement of tack strength, as can be seen for Control rubber Samples H and I. However, an addition of 10 phr of synthetic trans 1,4-polyisoprene to blends of synthetic cis 1,4-polyisoprene and natural cis 1,4-polyisoprene, as can be seen for Experimental rubber Samples K, M and O produced a degree of loss of tack strength, which, however, is still deemed adequate based on the previously reported Target of a tack strength minimum value of at least 5 Newtons for the uncured rubber composition. In contrast, the addition of 10 phr trans 1,4-polyisoprene to all of rubber Samples, I, K, M and O provided improved green strength and improved cut growth resistance.

It is further observed that the addition of 10 phr trans 1,4-polyisoprene also provides improved aged wire adhesion to all of the rubber Samples, whether a blend of trans 1,4-polyisoprene with synthetic cis 1,4-polyisoprene alone (Experimental rubber Sample I) or when blended with a combination of synthetic cis 1,4-polyisoprene and natural cis 1,4-polyisoprene (rubber Samples K, M and O) In most cases all blends containing 10 phr trans 1,4-polyisoprene also show improved original wire adhesion. Careful analysis of the data also provides the following conclusion relative to the blends of 10 phr trans 1,4-polyisoprene to cis 1,4-polyisoprenes: The addition to blends of synthetic cis 1,4-polyisoprene and natural cis 1,4-polyisoprene yield better aged wire adhesion properties and thus establish the basis for the best mode of practice being a blend of trans 1,4-polyisoprene with a combination of synthetic cis 1,4-polyisoprene and natural cis 1,4-polyisoprene. This result is totally unexpected and provides the best mode of practice for this invention.

## Claims

1. A tire which contains an internal layer of cord reinforced rubber composite, the rubber composite comprising, based upon parts by weight per 100 parts by weight rubber (phr):
(1) elastomers comprising:
(a) from 0 to 70 phr of a natural cis 1,4-polyisoprene rubber,
(b) 20 to 95 phr of a synthetic cis 1,4-polyisoprene rubber, and
(c) 2 to 20 phr of a trans 1,4-polyisoprene rubber,
(2) a rubber reinforcing filler in an amount of from 20 to 70 phr, the filler comprising:
(a) carbon black, or
(b) silica such as precipitated silica, or
(c) a combination of carbon black and silica which contains from 5 to 45 phr of silica,
and the internal layer of cord reinforced rubber composite further comprising at least one cord encapsulated by the rubber composite, wherein the cord comprises at least one filament selected from:
(1) a brass coated steel filament, or
(2) a nylon, polyester, rayon or polyaramid filament.

2. The tire of claim 1 wherein the rubber composite contains a coupling agent for the silica having a moiety reactive with hydroxyl groups on the silica and another different moiety interactive with at least one of the natural cis 1,4-polyisoprene rubber, synthetic cis 1,4-polyisoprene rubber and the trans 1,4-polyisoprene rubber.

3. The tire of claim 1 or 2 comprising:
(a) 20 to 70 phr of natural cis 1,4-polyisoprene rubber,
(b) 30 to 70 phr of synthetic cis 1,4-polyisoprene rubber, and
(c) 5 to 15 phr of trans 1,4-polyisoprene rubber.

4. The tire of claim 1 or 2 comprising 5 to 15 phr of trans 1,4-polyisoprene rubber.

5. The tire of claim 1 comprising 5 to 70 phr, alternatively 5 to 30 phr, of natural cis 1,4-polyisoprene rubber.

6. The tire of at least one of the previous claims wherein the trans 1,4-polyisoprene has a microstructure comprising at least 90 percent trans 1,4-isomeric units.

7. The tire of at least one of the previous claims wherein the natural and the synthetic cis 1,4-polyisoprene has a microstructure comprising at least 90 percent cis 1,4-isomeric units.

8. The tire of at least one of the previous claims wherein the cord comprises the at least one brass coated steel filament and is exclusive of an organic filament such as a nylon, polyester, rayon or polyaramid filament.

9. The tire of at least one of the previous claims wherein the cord comprises at least one of nylon, polyester, rayon and polyaramid filaments and is exclusive of metal filaments.

10. The tire of at least one of the previous claims wherein the tire component is a carcass ply and/or a circumferential tread belt ply.

## Patentansprüche

1. Reifen, welcher eine innere Lage aus kordverstärktem Kautschukverbundwerkstoff enthält, wobei der Kautschukverbundwerkstoff, auf Basis von Gewichtsteilen je 100 Gewichtsteile Kautschuk (ThK), umfasst:
(1) Elastomere, umfassend:
(a) 0 bis 70 ThK eines natürlichen cis-1,4-Polyisoprenkautschuks,
(b) 20 bis 95 ThK eines synthetischen cis-1,4-Polyisoprenkautschuks, und
(c) 2 bis 20 ThK eines trans-1,4-Polyisoprenkautschuks,
(2) einen Kautschukverstärkungsfüllstoff in einer Menge von 20 bis 70 ThK, wobei der Füllstoff umfasst:
(a) Carbon Black, oder
(b) Silika, wie etwa ausgefälltes Silika, oder
(c) eine Kombination von Carbon Black und Silika, welche 5 bis 45 ThK Silika enthält,
und wobei die innere Lage aus kordverstärktem Kautschukverbundwerkstoff weiter mindestens einen von dem Kautschukverbundwerkstoff eingekapselten Kord umfasst, wobei der Kord mindestens ein Filament umfasst, ausgewählt aus:
(1) einem messingbeschichteten Stahlfilament, oder
(2) einem Nylon-, Polyester-, Rayon- oder Polyaramidfilament.

2. Reifen nach Anspruch 1, wobei der Kautschukverbundwerkstoff ein Kopplungsmittel für das Silika enthält, das einen Anteil, der mit Hydroxylgruppen auf dem Silika reaktiv ist, und einen anderen, verschiedenen Anteil, der mit mindestens einem des natürlichen cis-1,4-Polyisoprenkautschuks, synthetischen cis-1,4-Polyisoprenkautschuks und des trans-1,4-Polyisoprenkautschuks in Wechselwirkung tritt, aufweist.

3. Reifen nach Anspruch 1 oder 2, umfassend:
(a) 20 bis 70 ThK natürlichen cis-1,4-Polyisoprenkautschuk,
(b) 30 bis 70 ThK synthetischen cis-1,4-Polyisoprenkautschuk, und
(c) 5 bis 15 ThK trans-1,4-Polyisoprenkautschuk.

4. Reifen nach Anspruch 1 oder 2, umfassend 5 bis 15 ThK trans-1,4-Polyisoprenkautschuk.

5. Reifen nach Anspruch 1, umfassend 5 bis 70 ThK, alternativ 5 bis 30 ThK, natürlichen cis-1,4-Polyisoprenkautschuk.

6. Reifen nach mindestens einem der vorgenannten Ansprüche, wobei das trans-1,4-Polyisopren eine mindestens 90 Prozent trans-1,4-Isomereinheiten umfassende Mikrostruktur aufweist.

7. Reifen nach mindestens einem der vorgenannten Ansprüche, wobei das natürliche und das synthetische cis-1,4-Polyisopren eine mindestens 90 Prozent cis-1,4-Isomereinheiten umfassende Mikrostruktur aufweisen.

8. Reifen nach mindestens einem der vorgenannten Ansprüche, wobei der Kord das mindestens eine messingbeschichtete Stahlfilament umfasst und unter Ausschluss eines organischen Filaments, wie etwa eines Nylon-, Polyester-, Rayon- oder Polyaramidfilaments, ist.

9. Reifen nach mindestens einem der vorgenannten Ansprüche, wobei der Kord mindestens eines von Nylon-, Polyester-, Rayon- und Polyaramidfilamenten umfasst und unter Ausschluss von Metallfilamenten ist.

10. Reifen nach mindestens einem der vorgenannten Ansprüche, wobei das Reifenbauteil eine Karkassenlage und/oder eine umfangsgerichtete Profilgürtellage ist.

## Revendications

1. Bandage pneumatique qui contient une couche interne d'un composite de caoutchouc renforcé avec des câblés, le composite de caoutchouc comprenant, basées sur des parties en poids par 100 parties en poids de caoutchouc (phr) :
(1) des élastomères comprenant :
(a) à concurrence de 0 à 70 phr, un caoutchouc naturel de cis-1,4-polyisoprène ;
(b) à concurrence de 20 à 95 phr, un caoutchouc synthétique de cis-1,4-polyisoprène ; et
(c) à concurrence de 2 à 20 phr, un caoutchouc de trans-1,4-polyisoprène ;
(2) une matière de charge pour le renforcement du caoutchouc en une quantité de 20 à 70 phr, la matière de charge comprenant :
(a) du noir de carbone ; ou
(b) de la silice sous la forme de silice précipitée ; ou
(c) une combinaison de noir de carbone et de silice, qui contient de la silice à concurrence de 5 à 45 phr ;
et la couche interne du composite de caoutchouc renforcé avec des câblés comprenant en outre au moins un câblé encapsulé par le composite de caoutchouc, le câblé comprenant au moins un filament choisi parmi le groupe comprenant :
(1) un filament en acier revêtu de laiton ; ou
(2) un filament en nylon, en polyester, en rayonne ou en polyaramide.

2. Bandage pneumatique selon la revendication 1, dans lequel le composite de caoutchouc contient un agent de couplage pour la silice possédant une fraction apte à réagir avec les groupes hydroxyle sur la silice et une autre fraction différente qui entre en interaction avec au moins un des caoutchoucs suivants à savoir un caoutchouc naturel de cis-1,4-polyisoprène, un caoutchouc synthétique de cis-1,4-polyisoprène et un caoutchouc de trans-1,4-polyisoprène,

3. Bandage pneumatique selon la revendication 1 ou 2, comprenant :
(a) à concurrence de 20 à 70 phr, un caoutchouc naturel de cis-1,4-polyisoprène ;
(b) à concurrence de 30 à 70 phr, un caoutchouc synthétique de cis-1,4-polyisoprène ; et
(c) à concurrence de 5 à 15 phr, un caoutchouc de trans-1,4-polyisoprène.

4. Bandage pneumatique selon la revendication 1 ou 2, comprenant à concurrence de 5 à 15 phr, un caoutchouc de trans-1,4-polyisoprène.

5. Bandage pneumatique selon la revendication 1, comprenant à concurrence de 5 à 70 phr, en variante à concurrence de 5 à 30 phr un caoutchouc naturel de cis-1,4-polyisoprène.

6. Bandage pneumatique selon au moins une des revendications précédentes, dans lequel le caoutchouc de trans-1,4-polyisoprène possède une microstructure comprenant des unités isomères 1,4-trans à concurrence d'au moins 90 %.

7. Bandage pneumatique selon au moins une des revendications précédentes, dans lequel le caoutchouc naturel et le caoutchouc synthétique de cis-1,4-polyisoprène possèdent une microstructure comprenant des unités isomères 1,4-cis à concurrence d'au moins 90 %.

8. Bandage pneumatique selon au moins une des revendications précédentes, dans lequel le câblé comprend ledit au moins un filament en acier revêtu de laiton et ne contient aucun filament organique tel qu'un filament en nylon, en polyester, en rayonne ou en polyaramide.

9. Bandage pneumatique selon au moins une des revendications précédentes, dans lequel le câblé comprend ledit au moins un filament choisi parmi le groupe comprenant un filament en nylon, en polyester, en rayonne ou en polyaramide et ne contient aucun filament métallique.

10. Bandage pneumatique selon au moins une des revendications précédentes, dans lequel le composant du bandage pneumatique est une nappe de carcasse et/ou une nappe de ceinture de bande de roulement circonférentielle.
